# FASCICULE DE BREVET EUROPEEN

(11) **EP 2 444 575 B1**
(45) Date de publication et mention de la délivrance du brevet: **31.10.2012**
(21) Numéro de dépôt: 11186053.2
(22) Date de dépôt: 21.10.2011
(51) Int. Cl.: E05C 19/14, E05B 63/06

(54) **Verrou à crochet muni d'un dispositif de positionnement et procédé de montage d'un tel verrou**
Riegel mit Haken und Positionierungsvorrichtung, sowie Verfahren zur Montage eines solchen Riegels
Pawl lock provided with a positioning device and method for installing such a lock

(30) Priorité: 25.10.2010 FR 1058745
(43) Date de publication de la demande: 25.04.2012
(73) Titulaire: Lisi Aerospace SAS, 75012 Paris (FR)
(72) Inventeur: Defrance, Vincent, 18000 Bourges (FR); Luneau, Etienne, 36100 Segry (FR)
(74) Mandataire: Chauveau, Ariane

(56) Documents cités:
- FR-A1- 2 458 657
- US-A- 4 116 479
- US-A- 4 530 529
- US-A- 4 602 812
- US-A- 5 984 382

## Description

### DOMAINE TECHNIQUE DE L'INVENTION

La présente invention se rapporte à un verrou à crochet muni d'un dispositif de positionnement. Le domaine technique de l'invention est, d'une façon générale, celui des dispositifs de verrouillage et de déverrouillage. Plus particulièrement, l'invention concerne les verrous à crochet destinés au verrouillage et au déverrouillage d'une structure mobile sur une structure fixe d'un véhicule, par exemple un appareil de type aéronef.

### ARRIERE PLAN TECHNOLOGIQUE DE L'INVENTION

Dans l'état de la technique, on connaît l'enseignement technique des documents US 4 602 812 A, US 4 530 529 A, US 4 116 479 A, US5984382A, US6343815B1, US6382690B1 et US7131672B2 qui divulguent des verrous à crochet.

Typiquement, de tels verrous peuvent soit être solidaires de la structure fixe de l'appareil et aptes à accrocher et maintenir sa structure mobile, soit être solidaires de sa structure mobile et aptes à accrocher sa structure fixe pour fixer ladite structure.

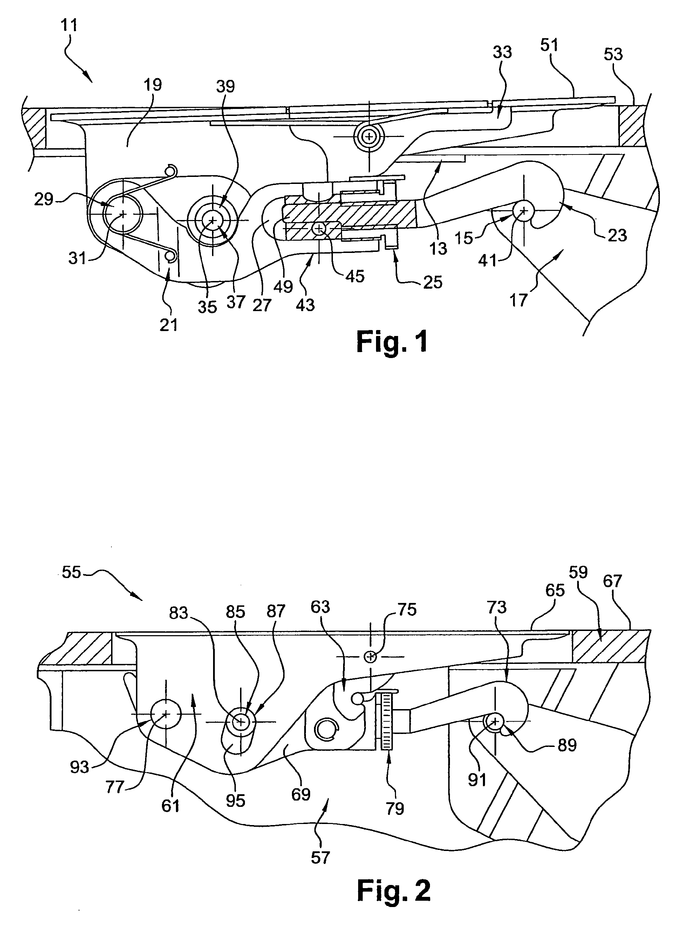

La figure 1 représente, de façon schématique, une vue en coupe d'un verrou 11 à crochet selon un mode de réalisation de l'état de la technique dans son environnement et dans une position verrouillée de désaffleurement. Dans l'exemple, le verrou 11 est monté sur une structure mobile 13 d'aéronef pour accrocher une gâche 15 positionnée sur une structure fixe 17. Pour deux surfaces distinctes, on entend par position d'affleurement, une position dans laquelle elles ne forment plus qu'une seule surface.

Le verrou 11 comporte une poignée 19 et une pièce de liaison appelée adaptateur 21 dans laquelle un crochet 23 est monté par l'intermédiaire d'une pièce d'ajustement de type écrou 25. L'écrou 25 permet un ajustement de l'enfoncement du crochet 23 au sein d'une cavité 27 de l'adaptateur 21. La poignée 19 et l'adaptateur 21 sont assemblés par l'intermédiaire d'un rivet 29 situé à une extrémité du verrou 11 opposée au crochet 23. Le rivet 29 s'étend suivant un axe 31 de rotation de l'adaptateur 21 par rapport à la poignée 19. Un élément de verrouillage de type gâchette 33 permet de sécuriser la poignée 19 en position fermée.

La structure mobile 13 présente un deuxième axe 35 de liaison pivot autour duquel l'ensemble du verrou 11 est guidé en rotation. Dans l'exemple, le deuxième axe 35 de liaison pivot est sensiblement parallèle au premier axe 31 et est matérialisé par une tige 37 fixe par rapport à la structure mobile 13 et traversant une entretoise 39 solidaire de la poignée 19.

Le crochet 23 présente une forme apte à accrocher la gâche 15 s'étendant suivant un troisième axe 41 parallèle aux deux premiers axes 31 et 35.

L'adaptateur 21 présente une partie globalement cylindrique 43 au sein de laquelle est aménagée la cavité 27 qui est partiellement taraudée. La partie cylindrique 43 est traversée par une première broche 45 remplissant une fonction de blocage en rotation du crochet 23 par rapport à l'adaptateur 21. Dans l'exemple, la broche 45 s'étend suivant un axe perpendiculaire à une tige 49 du crochet 23.

Le crochet 23 se prolonge en la tige filetée 49, ladite tige étant adaptée à être vissée, via ce filetage et l'écrou 25 d'ajustement, au sein de la cavité 27 de l'adaptateur 21. A cet effet, l'écrou 25 est fileté et taraudé.

La poignée 19 présente une surface supérieure 51 destinée, en théorie, à affleurer une surface aérodynamique 53 de l'appareil de façon à ne pas trop dégrader l'aérodynamisme global de l'appareil. Mais, du fait des diverses tolérances de fabrication et d'assemblage, il s'avère que la surface supérieure 51 du verrou 11 est souvent, comme dans l'exemple, dans une position de désaffleurement, c'est-à-dire des extrémités de la poignée 19 ne sont pas alignées avec la surface aérodynamique 53 de l'appareil, ce qui représente une dégradation considérable de l'aérodynamisme, une augmentation de la trainée aérodynamique et donc une hausse importante de la consommation en carburant de l'appareil.

Dans le cas de structures mobiles avec de fortes contraintes aérodynamiques, par exemple des radomes d'avion, c'est-à-dire des dômes situés à l'extrémité avant de l'avion et protégeant généralement une antenne radar, l'impact de l'affleurement de la surface supérieure des verrous est très critique. Ce type de verrou, pourtant couramment utilisé, pose donc un problème technique majeur à l'homme du métier. Dans l'état de la technique, pour tenter d'améliorer le positionnement de la surface supérieure des verrous à crochet, la seule solution envisagée par l'homme du métier consiste à ajuster, sur la structure fixe de l'appareil et via un dispositif de réglage complexe, le point d'accroche du crochet. Mais cette solution nécessite de déverrouiller le verrou afin de séparer les éléments mobiles de la structure pour accéder au système de réglage du point d'accroche. Ceci représente une perte de temps non négligeable et donc une immobilisation longue de l'appareil, et requiert en plus la mise en oeuvre de moyens humains et l'utilisation d'outillages spécifiques.

### DESCRIPTION GENERALE DE L'INVENTION

Dans l'invention, pour remédier aux inconvénients précédemment cités, on a réalisé un dispositif de réglage directement intégré au verrou. Plus précisément, le dispositif selon l'invention est matérialisé, dans un exemple préféré de réalisation, par un étrier associé à une vis, l'étrier étant adapté à chevaucher l'adaptateur et la vis à être vissée dans le ce dernier.

L'invention a donc pour objet un verrou à crochet configuré de sorte à verrouiller et déverrouiller une structure mobile sur une structure fixe d'un véhicule, l'une des deux structures portant un premier axe de liaison pivot autour duquel l'ensemble du verrou est guidé en rotation, ledit verrou présentant
- un adaptateur équipé d'un crochet adapté à accrocher une gâche solidaire de l'autre structure,
- une poignée comportant une gâchette, au moins l'une de la poignée et de la gâchette présentant une surface supérieure destinée à affleurer une surface aérodynamique du véhicule,
- sur la poignée, un deuxième axe de liaison pivot autour duquel la gâchette est guidée en rotation au sein de la poignée,
- sur la gâchette, au moins un crochet apte à accrocher au moins une protubérance d'un étrier solidaire de l'adaptateur,
- un troisième axe de liaison pivot autour duquel la poignée et l'adaptateur sont guidés en rotation l'un par rapport à l'autre,
   caractérisé en ce qu'il présente un dispositif de réglage de l'affleurement de la surface supérieure de la poignée par rapport à la surface aérodynamique, ledit dispositif comportant
- l'étrier, présentant deux plaques latérales sur l'une desquelles sont aménagées la protubérance et une plaque supérieure de liaison,
- une vis adaptée à être vissée et dévissée dans une première cavité taraudée de l'adaptateur, une tête de la vis prenant appui contre ladite plaque supérieure.

Grâce à ces dispositions, un simple vissage ou dévissage de la vis permet de régler un angle formé par la poignée et l'adaptateur. Ledit dispositif ne requiert aucun aménagement des structures de l'appareil et permet de s'affranchir des opérations d'ajustement des pièces d'accroche de la structure fixe.

Selon des caractéristiques particulières,
- la tête de la vis présente une périphérie crénelée,
- l'adaptateur comporte une languette en appui contre ladite périphérie.

Grâce à ces dispositions, la rotation de la vis peut être arrêtée sur une position voulue.

Selon des caractéristiques particulières,
- la plaque supérieure de l'étrier est sensiblement perpendiculaire aux deux plaques latérales, et présente une encoche apte à recevoir un fût de la vis,
- lesdites plaques présentent des tranches parallèles entre elles,
- l'adaptateur comporte quatre parois parallèles entre elles et en contact avec lesdites tranches,
- la vis présente, sur son fût, à une distance de la tête correspondant sensiblement à l'épaisseur de l'étrier, un épaulement sensiblement perpendiculaire audit fût.

Grâce à ces dispositions, l'adaptateur guide l'étrier lors du vissage et/ou dévissage de la vis et la tête et l'épaulement est au contact, de part et d'autre de la plaque supérieure de l'étrier lorsque le fût de la vis est engagé dans l'encoche de l'étrier. Ainsi, on peut faire varier l'écart entre les protubérances de l'étrier et l'adaptateur c'est-à-dire l'angle formé par la poignée et l'adaptateur autour du troisième axe.

Selon des caractéristiques particulières, la languette de maintien présente
- soit une section en forme de V, la pointe du V étant configurée de sorte à s'engager dans des creux de la crénelure de la tête de vis.
- soit une fente apte à recevoir un créneau de la crénelure périphérique de la tête de vis.

Les inventeurs ont déterminé que ces deux dispositions sont optimales.

Selon des caractéristiques particulières, l'adaptateur présente une deuxième cavité sensiblement perpendiculaire à la première cavité, taraudée au moins partiellement et au sein de laquelle une tige filetée du crochet est vissée via une pièce intermédiaire d'ajustement filetée et taraudée, ledit adaptateur et ladite cavité étant traversés par une broche adaptée à être en contact avec une encoche aménagée dans ladite tige.

Grâce à ces dispositions, la coopération de la broche avec l'encoche permet de bloquer en rotation le crochet.

Selon des caractéristiques particulières,
- les plaques latérales de l'étrier présentent deux ouvertures oblongues adaptées à être traversées par la broche, lesdites ouvertures présentant une section adaptée à un réglage de l'écartement de l'étrier par rapport à l'adaptateur, ledit réglage s'effectuant suivant une plage d'ajustement prédéterminée,
- la languette se prolonge perpendiculairement dans la direction du crochet de manière à être en appui contre une périphérie crénelée de la pièce d'ajustement.

Grâce à ces dispositions, la rotation de la pièce d'ajustement peut être arrêtée sur une position voulue.

Selon des caractéristiques particulières, la tige filetée du crochet comporte un talon adapté à être en butée contre la broche lorsque le crochet tend à sortir de la première cavité.

Grâce à ces dispositions, malgré les vibrations du véhicule inhérentes à son fonctionnement, les crochets des adaptateurs ne peuvent pas se décrocher tout seuls et provoquer l'arrachement de la structure mobile, ledit arrachement représentant un danger important pour les passagers.

Selon des caractéristiques particulières, la broche présente une section circulaire, et l'encoche est
- soit un creux usiné dans la partie filetée de la tige, ledit creux présentant un fond plat et des extrémités courbes adaptées à épouser la forme de la broche, l'extrémité courbe, opposée au crochet, constituant le talon.
- soit une fente oblongue usinée à travers la partie filetée de la tige et adaptée à épouser la forme de la broche, une extrémité courbe de la fente, opposée au crochet, constituant le talon.

Les inventeurs ont déterminé que ces deux dispositions sont optimales.

Selon des caractéristiques particulières, le talon est une protubérance s'étendant dans une direction sensiblement perpendiculaire à un plan passant par des crêtes des filets du crochet.

Grâce à ces dispositions, le talon peut être aménagé sur une tige de crochet de l'état de la technique.

L'invention a également pour objet un procédé de montage d'un verrou à crochet, dans lequel
- on usine et on assemble une poignée et une gâchette,
- on usine un crochet, une broche et une pièce intermédiaire d'ajustement filetée et taraudée, le crochet se prolongeant en une tige au moins partiellement filetée,
- on moule un adaptateur en y aménageant deux cavités s'étendant suivant des axes sensiblement perpendiculaires entre eux,
- on taraude lesdites cavités et on perce transversalement ledit adaptateur, puis
- on assemble l'adaptateur et la poignée au moyen d'un premier rivet s'étendant suivant un axe de liaison pivot,
   caractérisé en ce que,
- on usine un dispositif de réglage de l'affleurement de la poignée par rapport à une surface aérodynamique du véhicule, ledit dispositif de réglage comportant un étrier et une vis, puis
- on visse ledit dispositif au sein de l'un des taraudages de l'adaptateur, et la tige filetée du crochet au sein de l'autre taraudage, puis
- on insère la broche à travers l'étrier et l'adaptateur.

Grâce à ces dispositions, le dévissage du crochet par un opérateur ne peut pas être excessif, c'est-à-dire ne peut pas engendrer de délogement de la tige du crochet, ledit délogement représentant une perte de temps considérable pour l'installation du verrou.

L'invention a également pour objet un procédé de réglage d'affleurement d'une surface supérieure d'une poignée d'un verrou à crochet vis-à-vis d'une surface aérodynamique d'un véhicule, le verrou étant configuré de sorte à verrouiller et déverrouiller une structure mobile sur une structure fixe du véhicule, le verrou présentant également un adaptateur assemblé avec la poignée via un axe de liaison pivot autour duquel ils sont guidés en rotation l'un par rapport à l'autre, dans lequel
- on ferme le verrou,
- on évalue, par exemple par une mesure, un affleurement ou un désaffleurement entre la surface supérieure de la poignée et la surface aérodynamique du véhicule, puis
   - si l'affleurement correspond à un résultat prédéterminé, on valide le réglage, ou
   - si l'affleurement ne correspond pas audit résultat,
      - on ouvre le verrou et on ajuste un angle formé par la poignée et l'adaptateur en vissant ou en dévissant une vis d'un dispositif de réglage d'affleurement installé dans le verrou, puis
      - on referme le verrou, puis
      - on réévalue l'affleurement ou le désaffleurement,
         - si l'affleurement correspond au résultat prédéterminé, on valide le réglage, ou
         - si l'affleurement ne correspond pas au résultat prédéterminé, on réduit le désaffleurement jusqu'à obtenir ledit résultat.

Grâce à ces dispositions, on peut ajuster de façon simple et rapide l'affleurement de la surface supérieure du verrou par rapport à la peau de l'appareil et ainsi optimiser l'aérodynamisme de l'appareil.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- figure 1, déjà décrite : une représentation schématique d'une vue en coupe d'un verrou à crochet selon un mode de réalisation de l'état de la technique dans son environnement et dans une position verrouillée de désaffleurement ;
- figure 2 : une représentation schématique d'une vue de côté d'un verrou à crochet selon un mode de réalisation de l'invention dans son environnement et dans une position verrouillée d'affleurement ;
- figure 3 : une représentation schématique d'une vue en coupe du même verrou à crochet selon un mode de réalisation de l'invention dans son environnement et dans une position verrouillée de désaffleurement;
- figure 4 : une représentation schématique d'une vue rapprochée en coupe d'un adaptateur de verrou à crochet selon un mode de réalisation de l'invention ;
- figure 5 : une représentation schématique d'une vue en perspective oblique du même verrou à crochet selon un mode de réalisation de l'invention dans une position déverrouillée ;
- figure 6 : une représentation schématique d'une vue en perspective oblique du même verrou à crochet selon un mode de réalisation de l'invention dans la position verrouillée ;
- figure 7 : une représentation schématique d'une première vue rapprochée en coupe du même verrou à crochet selon un mode de réalisation de l'invention dans la position verrouillée ;
- figure 8 : une représentation schématique d'une deuxième vue rapprochée en coupe du même verrou à crochet selon un mode de réalisation de l'invention dans la position verrouillée ;
- figure 9 : un logigramme de mise en oeuvre du procédé de montage du verrou selon un mode de réalisation de l'invention ;
- figure 10 : un logigramme de mise en oeuvre du procédé de réglage selon un mode de réalisation de l'invention.

### DESCRIPTION DETAILLEE DES FORMES DE REALISATION PREFERES DE L'INVENTION

Sur ces figures, les éléments identiques conservent les mêmes références.

La figure 2 représente, de façon schématique, une vue de côté d'un verrou 55 à crochet selon un mode de réalisation de l'invention dans son environnement et dans une position verrouillée d'affleurement.

Dans l'exemple, le verrou 55 présente un plan de symétrie le traversant en son milieu.

Le verrou 55 est configuré de sorte à verrouiller et déverrouiller une structure mobile 57 sur une structure fixe 59 d'un appareil de type aéronef. Dans l'exemple, l'appareil est un avion et la structure mobile 57 est un radome.

Le verrou 55 présente une poignée 61 comportant une gâchette 63. La poignée 61 présente une surface supérieure 65 destinée à affleurer une surface aérodynamique 67, communément appelée peau, de la structure fixe 59, ainsi que deux surfaces planes latérales sensiblement perpendiculaires à la surface supérieure 65.

Le verrou 55 comporte également un adaptateur 69 s'étendant, dans la position verrouillée, suivant une direction sensiblement parallèle à celle des surfaces planes de la poignée 61, et se prolongeant, d'un côté, en un coude 71 orienté vers la poignée 61, et de l'autre côté en un crochet 73.

La poignée 61 présente un premier axe 75 de liaison pivot autour duquel la gâchette 63 est guidée en rotation. Le verrou 55 présente un deuxième axe 77 de liaison pivot autour duquel la poignée 61 et l'adaptateur 69 sont guidés en rotation l'un par rapport à l'autre.

Le crochet 73 est assemblé dans l'adaptateur 69 par l'intermédiaire d'une pièce d'ajustement de type écrou 79. L'écrou 79 permet un ajustement de l'enfoncement du crochet 73 au sein d'une première cavité 81 de l'adaptateur 69.

La structure mobile 57 présente un troisième axe 83 de liaison pivot autour duquel l'ensemble du verrou 55 est guidé en rotation. Dans l'exemple, le troisième axe 83 de liaison pivot est sensiblement parallèle aux premier et deuxième axes 75 et 77 et est matérialisé par une tige 85 fixe par rapport au radome 57 et traversant une entretoise 87 solidaire de la poignée 61.

Le crochet 73 présente une forme adaptée à accrocher une gâche 89 s'étendant suivant un quatrième axe 91 sensiblement perpendiculaire à l'axe principal du crochet 73 et solidaire de la structure fixe 59 de l'avion. Dans l'exemple, la gâche 89 est matérialisée par une tige.

Dans l'exemple, le deuxième axe 77 de liaison pivot est sensiblement parallèle au premier axe 75 et est matérialisé par un rivet 93.

Pour permettre un verrouillage adéquat de l'ensemble du verrou 55, le troisième axe 83 est désaligné par rapport à un plan, non représenté, reliant le deuxième axe 77 et le quatrième axe 91.

Dans l'exemple, la poignée 61 présente une encoche oblongue 95 configurée de sorte à laisser, dans un premier temps, ladite poignée s'élever de 15° par une pression d'un opérateur sur un bord de la surface supérieure de la gâchette 63. Dans un deuxième temps, l'opérateur tire sur une extrémité de la poignée 61 pour déverrouiller et faire coulisser le crochet 73 sur la gâche 89 afin qu'il s'en libère.

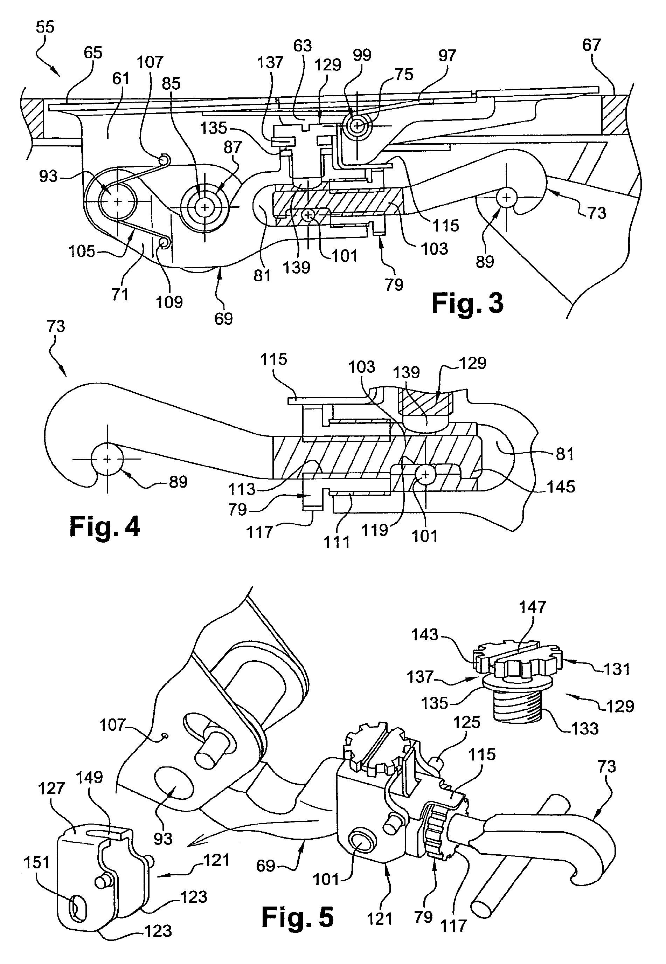

Les figures 3, 4 et 5 représentent, de façon schématique, respectivement
- une vue en coupe du même verrou 55 dans son environnement et dans une position verrouillée de désaffleurement,
- une vue rapprochée en coupe de l'adaptateur 69 du verrou 55 ,
- une vue en perspective oblique dudit verrou dans une position déverrouillée.

On entend ici par position verrouillée de désaffleurement une position dans laquelle l'extrémité de la poignée 61 n'est pas alignée avec la surface aérodynamique 67 de l'appareil.

La gâchette 63 est contrainte en rotation à l'aide d'un premier moyen élastique 97. Dans l'exemple, le premier axe 75 de liaison pivot est matérialisé par un rivet 99. Typiquement, le moyen élastique 97 est un ressort enroulé autour du rivet 99 et prenant appui d'un côté sur une surface inférieure de la poignée 61 et de l'autre sur une surface inférieure de la gâchette 63.

L'adaptateur 69 présente une partie globalement cylindrique au sein de laquelle est aménagée la première cavité 81. La partie cylindrique est traversée par une première broche 101 remplissant une fonction de blocage en rotation du crochet 73 par rapport à l'adaptateur 69. Dans l'exemple, la broche 101 est un rivet qui s'étend suivant un axe perpendiculaire à un axe suivant lequel le crochet 73 se prolonge en une tige 103.

La poignée 61 et l'adaptateur 69 sont contraints en rotation à l'aide d'un deuxième moyen élastique 105.

Typiquement, le deuxième moyen élastique 105 est un ressort enroulé autour du rivet 93 et prenant appui, d'un côté, sur une broche transversale 107 de la poignée 61 et, de l'autre côté, sur une broche 109 du coude 71 de l'adaptateur 69.

Le crochet 73 se prolonge en la tige 103 qui est filetée, la tige 103 étant adaptée à être vissée, via ce filetage et l'écrou 79 d'ajustement au sein de la cavité 81 de l'adaptateur 69. A cet effet, l'écrou 79 est fileté 111 et taraudé 113. Dans l'exemple, le filetage 111 et le taraudage 113 présentent des pas inversés et dont la rotation est maîtrisée via une languette 115 de maintien en appui contre une crénelure périphérique 117 dudit écrou. Dans une variante, les pas de l'écrou 79 sont simplement différents.

Typiquement, la broche 101 est disposée de manière à affleurer une encoche 119 aménagée à l'extrémité et en périphérie de la tige filetée 103 du crochet 73 pour bloquer sa rotation.

Selon l'invention, du fait des tolérances de fabrication, une fois le verrou 55 installé dans son environnement, c'est-à-dire monté sur la tige 85 solidaire de la structure mobile 57, on visse ou on dévisse la pièce intermédiaire 79 de manière à ajuster une tension entre ledit verrou solidaire de la structure mobile 57 et la structure fixe 59 de l'avion, et ainsi assurer un placage de la structure mobile 57 sur la structure fixe 59 de l'avion.

Selon l'invention, le dispositif de réglage de l'affleurement de la poignée 61 par rapport à la peau 67 de l'appareil comporte :
- un étrier 121 présentant deux plaques latérales 123 représentées sur la figure 4 et sur lesquelles sont aménagées deux protubérances 125 ainsi qu'une plaque supérieure 127 de liaison entre ces deux plaques latérales, et
- une vis 129 adaptée à être vissée dans l'adaptateur 69, comportant d'une part une tête 131 et d'autre part un fût 133 présentant un épaulement 135 constituant une gorge 137 dans laquelle vient se loger la plaque supérieure 127 de l'étrier 121.

Plus précisément, l'adaptateur 69 présente une deuxième cavité 139 partiellement taraudée et débouchant de manière sensiblement perpendiculaire à la première cavité 81 pour recevoir la vis 129.

Dans une variante, la vis ne présente pas d'épaulement et un système élastique assure la remontée de l'étrier.

Dans un exemple, les protubérances 125 sont matérialisées par des ergots s'étendant perpendiculairement aux plaques latérales 123 sur une longueur de l'ordre de quelques millimètres.

Les surfaces latérales de la gâchette 63 présentent chacune, à leur extrémité opposée à la surface supérieure, un crochet 141 adapté à accrocher une des protubérances 125 de l'étrier 121.

Dans l'exemple, une périphérie 143 de la tête 131 de vis 129 est crénelée et la languette 115 remplit une double fonction car elle se prolonge perpendiculairement de manière à être en appui contre ladite tête pour maîtriser sa rotation. Par ailleurs, la partie de la languette 115 en appui contre l'écrou 79 s'étend de part et d'autre de la partie en appui contre la tête 131 de vis 129, le long et autour de l'adaptateur 69 de manière à être traversée par la broche 101 et ainsi à être solidaire dudit adaptateur 69.

Dans l'exemple, la languette 115 de maintien est plate. Dans une première variante, la languette 115 présente une fente adaptée à recevoir un créneau de la crénelure périphérique de la tête de vis. Dans une deuxième variante, la languette 115 de maintien présente une section en forme de V, la pointe du V étant configurée de sorte à s'engager dans les creux de la crénelure 143 de la tête 131 de vis 129.

Selon l'invention, le vissage de la vis 129 rapproche l'étrier 121 de l'adaptateur 69 et diminue un angle formé par la surface supérieure plane 65 de la poignée 61 et la tige 103 du crochet 73, et le dévissage de la vis 129 écarte l'étrier 121 de l'adaptateur 69 et augmente ledit angle.

Autrement dit, le vissage et le dévissage de la vis 129 constituent le réglage de l'affleurement de la poignée 61 par rapport à la peau 67 de l'appareil.

Pour permettre un tel réglage selon l'invention, l'entretoise 87 et le coude 71 de l'adaptateur 69 sont distants d'une valeur cohérente avec une plage de réglage prédéfinie pour le verrou. En effet, il existe un jeu entre l'entretoise 87 et le coude 71. Le verrou étant théoriquement monté en position nominale, la plage de réglage doit être au moins égale à deux fois le jeu pour rattraper d'éventuels défauts.

Dans un mode de réalisation selon l'invention, la broche 101 présente une section circulaire et est disposée de manière à être en contact avec une encoche 119 pour bloquer la rotation de la tige 103. L'encoche 119 est un creux usiné dans une extrémité, opposée au crochet 73, de la tige 103. Le creux présente un fond plat et des extrémités courbes adaptées à épouser la forme de la broche 101. L'extrémité courbe opposée au crochet 73 constitue un talon 145.

Lorsque le crochet 73 tend à sortir de la cavité 81, c'est-à-dire, dans le cas d'un dévissage abusif dudit crochet par l'opérateur ou dans le cas d'un dévissage intempestif dudit crochet durant le fonctionnement du véhicule, la broche 101 butte contre le talon 145 et empêche ainsi la tige 103 de sortir de son logement 81.

Dans une variante, l'encoche est une fente oblongue usinée à travers la partie filetée de la tige et adaptée à épouser la forme de la broche, une extrémité courbe de la fente, opposée au crochet, constituant le talon.

Dans une autre variante, la tige ne comporte pas d'encoche mais simplement un talon matérialisé par une protubérance qui s'étend dans une direction sensiblement perpendiculaire à un plan passant par des crêtes des filets de la tige.

Dans l'exemple, la tête 131 de vis 129 est plate et présente une fente 147 aménagée sur sa surface supérieure de manière à recevoir la pointe d'un outil de type tournevis adapté à faciliter le vissage et le dévissage de la vis 129. Dans une variante, le vissage et le dévissage se font uniquement manuellement.

La plaque supérieure 127 de l'étrier 121 est sensiblement perpendiculaire aux deux plaques latérales 123 et présente une encoche 149 adaptée à recevoir le fût 133 de la vis 129. Les plaques latérales 123 de l'étrier 121 présentent deux ouvertures oblongues 151 configurées de sorte à être traversées par la broche 101.

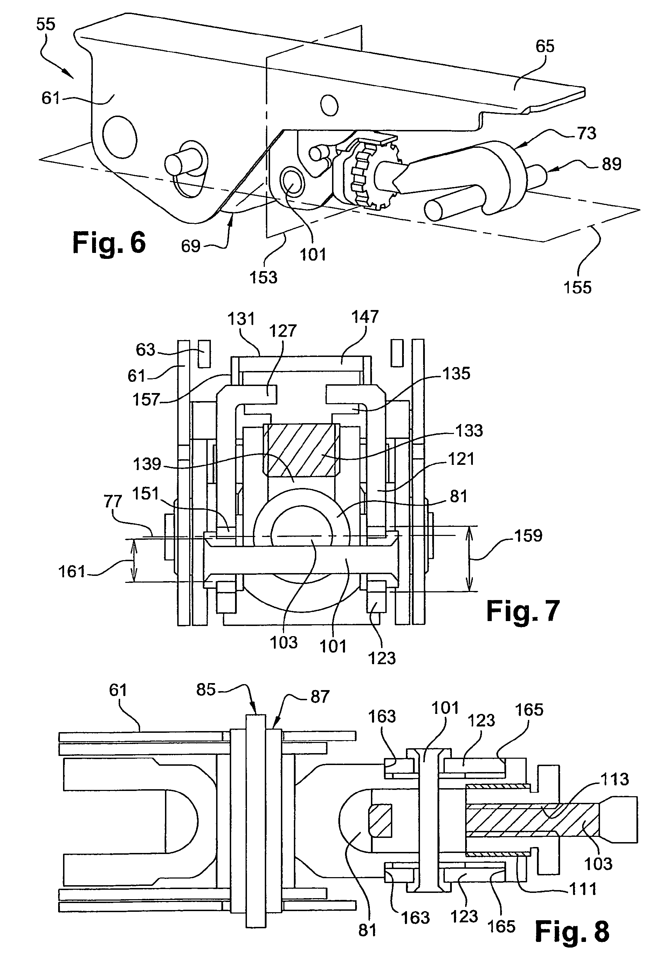

La figure 6 représente, de façon schématique, une vue en perspective oblique du même verrou à crochet selon un mode de réalisation de l'invention dans la position verrouillée.

Un premier plan 153 coupe le verrou 55 perpendiculairement à la surface supérieure 65 de sa poignée 61 en passant par le centre de la broche 101.

Un deuxième plan 155 coupe le verrou 55 parallèlement la surface supérieure 65 de sa poignée 61 en passant par le centre de la broche 101.

La figure 7 représente, de façon schématique, une première vue rapprochée en coupe 153, du côté opposé au crochet 73, du même verrou 55 à crochet selon un mode de réalisation de l'invention, dans la position verrouillée, et la figure 8 une deuxième vue rapprochée en coupe 155, du côté opposé au crochet 73, du verrou 55 dans la position verrouillée.

Dans l'exemple, l'épaulement 135 de la vis 129 est placé pour être à une distance de la tête 131 correspondant à l'épaisseur 157, additionnée d'un jeu fonctionnel, de la plaque supérieure 127 de l'étrier 121 et parallèle aux surfaces inférieure et supérieure de la tête 131 de manière à ce que la tête 131 et l'épaulement 135 soient au contact, de part et d'autre, de la plaque supérieure 127 de l'étrier 121 lorsque la gorge 137 de la vis 129 est engagé dans l'encoche 149 de l'étrier 121.

Les ouvertures oblongues 151 présentent une section 159 dont la dimension la plus grande est supérieure à la dimension la plus grande d'une section 161 de la broche 101. La dimension de la section 159 est ainsi égale à la dimension la plus grande de la section 161 plus la plage de réglage prédéfinie (par exemple, deux millimètres). Ainsi, grâce à l'invention, on s'assure que le désaffleurement de la surface supérieure 65 de la poignée 61 est ajustable de l'ordre de plus ou moins deux millimètres au niveau de l'extrémité de la poignée 61.

L'adaptateur 69 présente quatre parois 163 et 165 parallèles entre elles et parallèles à l'axe de la cavité 139 de l'adaptateur 69 de manière à guider, par coulissement, l'étrier 121 lors de son écartement et/ou de son rapprochement par rapport à l'adaptateur 69.

La vis 129 présente un filetage de sorte à être vissée et/ou dévissée dans le taraudage la deuxième cavité 139.

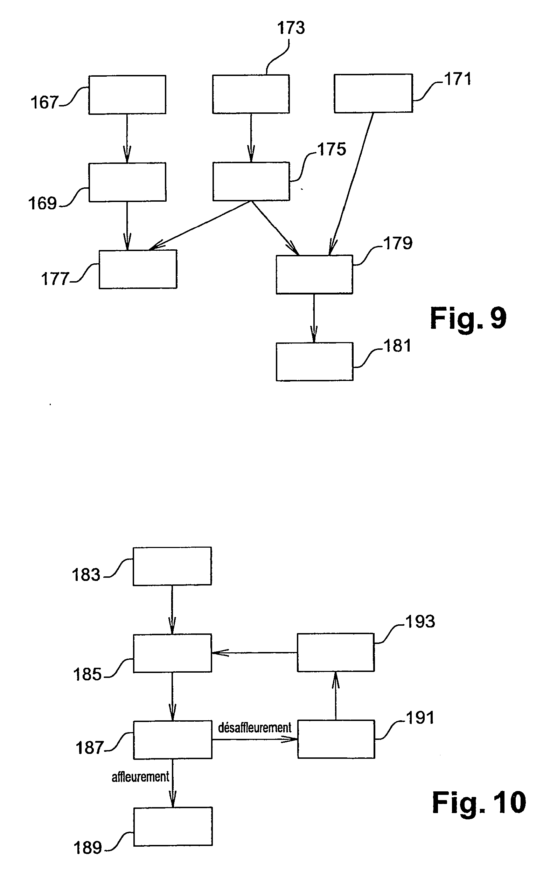

La figure 9 montre un logigramme de mise en oeuvre du procédé de montage du verrou 55 selon un mode de réalisation de l'invention.

Ledit procédé comporte des étapes dans lesquelles,
- on usine 167 puis on encastre 169 la poignée et la gâchette,
- on usine 171 le crochet, la broche, l'écrou et le dispositif de réglage d'affleurement,
- on moule 173 l'adaptateur en y aménageant les deux cavités,
- on taraude 175 lesdites cavités et on perce transversalement ledit adaptateur, puis
- on assemble 177 l'adaptateur et la poignée au moyen du premier rivet,
- on visse 179 ledit dispositif au sein de l'un des taraudages de l'adaptateur, et la tige filetée du crochet au sein de l'autre des taraudages, puis
- on insère 181 la broche à travers l'étrier et l'adaptateur.

Selon un mode de réalisation de l'invention, du fait des tolérances de fabrication, une fois le verrou installé dans son environnement, c'est-à-dire monté sur la tige solidaire de la structure mobile, on visse ou on dévisse l'écrou de manière à ajuster une tension entre ledit verrou, les structures mobile et fixe de l'avion, et ce sans risquer de dévisser complètement le crochet.

La figure 10 montre un logigramme de mise en oeuvre du procédé de réglage selon un mode de réalisation de l'invention.

Le procédé de réglage d'affleurement de la surface supérieure de la poignée vis-à-vis de la surface aérodynamique de l'appareil comporte des étapes dans lesquelles
- on ferme 185 le verrou,
- on évalue 187, par exemple par une mesure, le désaffleurement ou le désaffleurement potentiel entre la surface supérieure de la poignée et la surface aérodynamique du véhicule, puis
   - si l'affleurement correspond à un résultat prédéterminé, on valide 189 le réglage, ou
   - si l'affleurement ne correspond pas audit résultat,
      - on ouvre 191 le verrou et on ajuste 193 l'angle formé par la poignée et l'adaptateur en vissant ou en dévissant la vis, puis
      - on referme le verrou, puis
      - on réévalue l'affleurement ou le désaffleurement,
         - si l'affleurement correspond au résultat prédéterminé, on valide le réglage, ou
         - si l'affleurement ne correspond pas au résultat prédéterminé, on réduit le désaffleurement jusqu'à obtenir ledit résultat.

Dans un exemple, l'évaluation 187 est réalisée par toucher et à l'oeil nu.

L'invention n'est pas réduite au seul exemple décrit dans l'invention. Le verrou 55 peut ainsi être porté par la structure fixe 57, la gâche 89 étant alors portée par la structure mobile 59.

## Revendications

1. Verrou (55) à crochet (73) configuré de sorte à verrouiller et déverrouiller une structure mobile (57) sur une structure fixe (59) d'un véhicule, l'une des deux structures (57, 59) portant un premier axe (83) de liaison pivot autour duquel l'ensemble du verrou est guidé en rotation, ledit verrou présentant
- un adaptateur (69) équipé d'un crochet (73) adapté à accrocher une gâche solidaire de l'autre structure (57, 59),
- une poignée (61) comportant une gâchette (63), au moins l'une de la poignée et de la gâchette présentant une surface supérieure (65) destinée à affleurer une surface aérodynamique (67) du véhicule,
- sur la poignée, un deuxième axe (75) de liaison pivot autour duquel la gâchette est guidée en rotation au sein de la poignée,
- sur la gâchette, au moins un crochet (141) adapté à accrocher au moins une protubérance (125) d'un étrier (121) solidaire de l'adaptateur,
- un troisième axe (77) de liaison pivot autour duquel la poignée et l'adaptateur sont guidés en rotation l'un par rapport à l'autre, et
**caractérisé en ce qu'**il comporte un dispositif de réglage de l'affleurement de la surface supérieure de la poignée par rapport à la surface aérodynamique, ledit dispositif comportant
- l'étrier (121), présentant deux plaques latérales (123) sur l'une desquelles sont aménagées la protubérance et une plaque supérieure (127) de liaison,
- une vis (129) adaptée à être vissée et dévissée dans une première cavité (139) taraudée (67) de l'adaptateur, une tête (131) de la vis prenant appui contre ladite plaque supérieure (127).

2. Verrou selon la revendication 1, **caractérisé en ce que**
- la tête de la vis présente une périphérie (143) crénelée,
- l'adaptateur comporte une languette (115) en appui contre ladite périphérie.

3. Verrou selon l'une des revendications 1 à 2, **caractérisé en ce que**
- la plaque supérieure de l'étrier est sensiblement perpendiculaire aux deux plaques latérales, et présente une encoche (149) adaptée à recevoir un fût (133) de la vis,
- lesdites plaques présentent des tranches parallèles entre elles,
- l'adaptateur comporte quatre parois (163 ; 165) parallèles entre elles et en contact avec lesdites tranches,
- la vis présente, sur son fût, à une distance de la tête correspondant sensiblement à l'épaisseur de l'étrier, un épaulement (135) sensiblement perpendiculaire audit fût.

4. Verrou selon l'une des revendications 1 à 3, **caractérisé en ce que** la languette de maintien présente
- soit une section en forme de V, la pointe du V étant configurée de sorte à s'engager dans des creux de la crénelure de la tête de vis.
- soit une fente adaptée à recevoir un créneau de la crénelure périphérique de la tête de vis.

5. Verrou selon l'une des revendications 1 à 4, **caractérisé en ce que** l'adaptateur présente une deuxième cavité (81) sensiblement perpendiculaire à la première cavité, taraudée au moins partiellement et au sein de laquelle une tige filetée (103) du crochet (73) est vissée via une pièce intermédiaire d'ajustement (79) filetée (111) et taraudée (113), ledit adaptateur et ladite cavité étant traversés par une broche (101) adaptée à être en contact avec une encoche (119) aménagée dans ladite tige.

6. Verrou selon la revendication 5, **caractérisé en ce que**
- les plaques latérales de l'étrier présentent deux ouvertures oblongues (151) adaptées à être traversées par la broche, lesdites ouvertures présentant une section (159) adaptée à un réglage de l'écartement de l'étrier par rapport à l'adaptateur, ledit réglage s'effectuant suivant une plage d'ajustement prédéterminée,
- la languette se prolonge perpendiculairement dans la direction du crochet de manière à être en appui contre une périphérie crénelée (117) de la pièce d'ajustement.

7. Verrou selon l'une des revendications 5 à 6, **caractérisé en ce que** la tige filetée du crochet comporte un talon (145) adapté à être en butée contre la broche lorsque le crochet tend à sortir de la cavité.

8. Verrou selon la revendication 7, **caractérisé en ce que** la broche (101) présente une section circulaire, et l'encoche (119) est
- soit un creux usiné dans la tige filetée (103) du crochet, ledit creux présentant un fond plat et des extrémités courbes adaptées à épouser la forme de la broche, l'extrémité courbe, opposée au crochet, constituant le talon (145).
- soit une fente oblongue usinée à travers la tige filetée (103) du crochet et adaptée à épouser la forme de la broche, une extrémité courbe de la fente, opposée au crochet, constituant le talon (145).

9. Verrou selon la revendication 7, **caractérisé en ce que** le talon (145) est une protubérance s'étendant dans une direction sensiblement perpendiculaire à un plan passant par des crêtes des filets du crochet.

10. Procédé de montage d'un verrou (55) à crochet selon l'une des revendications 1 à 9, dans lequel
- on usine (167) et on assemble (169) une poignée (61) et une gâchette (63),
- on usine (171) un crochet (73), une broche (101) et une pièce intermédiaire d'ajustement (79) filetée (111) et taraudée (113), le crochet se prolongeant en une tige (103) au moins partiellement filetée,
- on moule (173) un adaptateur (69) en y aménageant deux cavités (81 ; 139) s'étendant suivant des axes sensiblement perpendiculaires entre eux,
- on taraude (175) lesdites cavités et on perce transversalement ledit adaptateur, puis
- on assemble (177) l'adaptateur et la poignée au moyen d'un premier rivet (93) s'étendant suivant un axe (77) de liaison pivot,
**caractérisé en ce que**,
- on usine (171) un dispositif de réglage de l'affleurement de la poignée par rapport à une surface aérodynamique (67) du véhicule, ledit dispositif de réglage comportant un étrier (121) et une vis (129), puis
- on visse (179) ledit dispositif au sein de l'un des taraudages de l'adaptateur, et la tige filetée du crochet au sein de l'autre taraudage, puis
- on insère (181) la broche à travers l'étrier et l'adaptateur.

11. Procédé de réglage d'affleurement d'une surface supérieure (65) d'une poignée (61) d'un verrou (55) à crochet selon l'une des revendications 1 à 9 vis-à-vis d'une surface aérodynamique (67) d'un véhicule, dans lequel
- on ferme (185) le verrou,
- on évalue (187), par exemple par une mesure, un affleurement ou un désaffleurement entre la surface supérieure de la poignée et la surface aérodynamique du véhicule, puis
- si l'affleurement correspond à un résultat prédéterminé, on valide (189) le réglage, ou
- si l'affleurement ne correspond pas audit résultat,
- on ouvre (191) le verrou et on ajuste (193) un angle formé par la poignée et l'adaptateur en vissant ou en dévissant une vis (129) d'un dispositif de réglage d'affleurement installé dans le verrou, puis
- on referme le verrou, puis
- on réévalue l'affleurement ou le désaffleurement,
- si l'affleurement correspond au résultat prédéterminé, on valide le réglage, ou
- si l'affleurement ne correspond pas au résultat prédéterminé, on réduit le désaffleurement jusqu'à obtenir ledit résultat.

## Claims

1. A hook (73) latch (55) configured so as to lock and unlock a mobile structure (57) on a fixed structure (59) of a vehicle, one of the two structures (57, 59) bearing a first pivot connection axis (83) around which the latch assembly is guided in rotation, said latch having
- an adapter (69) fitted with a hook (73) capable of fastening a striker connected to the other structure (57, 59),
- a handle (61) comprising a trigger (63), at least one of the handle and trigger having an upper surface (65) intended to be positioned flush with an aerodynamic surface (67) of the vehicle,
- on the handle, a second pivot connection axis (75), around which the trigger is guided in rotation within the handle,
- on the trigger, at least one hook (141) capable of fastening at least one protrusion (125) of a bracket (121) connected to the adapter,
- a third pivot connection axis (77), around which the handle and the adapter are guided in rotation in relation to each other, and
**characterised in that** it comprises an adjustment device for adjusting the flushness of the upper surface of the handle in relation to the aerodynamic surface, said device comprising
- the bracket (121), having two lateral plates (123) on one of which are located the protrusion and one upper connection plate (127),
- a screw (129) adapted to be screwed and unscrewed within a first tapped (67) recess (139) of the adapter, a screw head (131) resting against said upper plate (127).

2. A latch according to claim 1, **characterised in that**
- the screw head has a toothed periphery (143),
- the adapter comprises a retaining strip (115) resting against said periphery.

3. A latch according to one of claims 1 to 2, **characterised in that**
- the upper plate of the bracket is substantially perpendicular to the two lateral plates and has a notch (149) capable of accommodating a shaft (133) of the screw,
- said plates having sections located parallel to each other,
- the adapter comprises four walls (163; 165) parallel to each other and in contact with said sections,
- the screw has, on its shaft, at a distance from the head substantially corresponding to the thickness of the bracket, a shoulder (135) substantially perpendicular to said shaft.

4. A latch according to one of claims 1 to 3, **characterised in that** the retaining strip has
- either a V-shaped cross-section, the point of the V being configured so as to be inserted into the hollows of the toothing of the screw head.
- or a slit capable of housing a notch of the peripheral toothing of the screw head.

5. A latch according to one of claims 1 to 4, **characterised in that** the adapter has a second recess (81) substantially perpendicular to the first recess, at least partially tapped and within which a threaded rod (103) of the hook (73) is screwed via a threaded (111) and tapped (113) intermediate fitting part (79), a pin (101) passing through said adapter and said recess and capable of coming into contact with a notch (119) made within said rod.

6. A latch according to claim 5, **characterised in that**
- the lateral plates of the bracket have two oblong openings (151) capable of allowing the pin to pass through, said openings having a cross-section (159) adapted to an adjustment of the bracket clearance in relation to the adapter, said adjustment being performed according to a predetermined range of adjustment,
- the retaining strip extends perpendicularly in the direction of the hook so as to rest against a toothed periphery (117) of the fitting part.

7. A latch according to one of claims 5 to 6, **characterised in that** the threaded rod of the hook comprises a heel (45) capable of abutting against the pin when the hook moves to exit the recess.

8. A latch according to claim 7, **characterised in that** the pin (101) has a circular cross-section and the notch (119) is
- either a hollow machined in the threaded rod (103) of the hook, said hollow having a flat bottom and curved ends capable of taking on the shape of the pin, the curved end opposite the hook constituting the heel (145).
- or an oblong-shaped slit machined through the threaded rod (103) of the hook and capable of taking on the shape of the pin, one curved end of the slit, opposite the hook, constituting the heel (145).

9. A latch according to claim 7, **characterised in that** the heel (145) is a protrusion extending in a direction substantially perpendicular to a plane passing by the summits of the threads of the hook.

10. A method for assembling a hook latch (55) according to one of claims 1 to 9, wherein
- a handle (61) and a trigger (63) are machined (167) and assembled (169),
- a hook (73), a pin (101) and a threaded (111) and tapped (113) intermediate fitting part (79) are machined (171), the hook extending into a rod (103) at least partially threaded,
- an adapter (69) is moulded (173) by creating two recesses (81; 139) therein, extending along axes substantially perpendicular to each other,
- said recesses are tapped (175) and said adapter is transversely bored, then
- the adapter and the handle are assembled (177) by means of a first rivet (93) extending along a pivot connection axis (77),
**characterised in that**,
- an adjustment device is machined (171) for adjusting the flushness of the handle in relation to an aerodynamic surface (67) of the vehicle, said adjustment device comprising a bracket (121) and a screw (129), then
- said device is screwed (179) within one tapping of the adapter, and the threaded rod of the hook within the other tapping, then
- the pin is inserted (181) through the bracket and the adapter.

11. A method for adjusting the flushness of an upper surface (65) of a handle (61) of a hook latch (55) according to one of claims 1 to 9 in relation to an aerodynamic surface (67) of a vehicle, wherein
- the latch is closed (185),
- a level of flushness or non-flushness between the upper surface of the handle and the aerodynamic surface of the vehicle is assessed (187), for example by measuring, then
- if the flushness corresponds to a predetermined result, the adjustment is validated (189), or
- if the flushness does not correspond to said result,
- the latch is opened (191) and an angle formed by the handle and the adapter is adjusted (193) by screwing or unscrewing a screw (129) of a flushness adjustment device installed within the latch, then
- the latch is closed, then
- the flushness or non-flushness is reassessed,
- if the flushness corresponds to the predetermined result, the adjustment is validated, or
- if the flushness does not correspond to the predetermined result, the level of non-flushness is reduced to obtain said result.

## Patentansprüche

1. Riegel (55) mit Haken (73), der so konfiguriert ist, dass er eine bewegliche Struktur (57) auf einer feststehenden Struktur (59) eines Fahrzeugs verriegelt und löst, wobei eine der beiden Strukturen (57, 59) eine erste Achse (83) einer Drehzapfenverbindung trägt, um die der Riegel drehend geführt wird, und der besagte Riegel folgendes umfasst
- einen Adapter (69), der mit einem Haken (73) ausgestattet ist, der dazu geeignet ist, sich in einen Schließkeil einzuhängen, der mit der anderen Struktur (57, 59) kraftschlüssig verbunden ist,
- einen Griff (61) umfassend einen Auslöser (63), wobei zumindest einer der beiden, der Griff oder der Auslöser, eine Oberfläche (65) aufweist, die dazu bestimmt ist, mit einer aerodynamischen Oberfläche (67) des Fahrzeugs bündig abzuschließen,
- eine zweite Achse (75) einer Drehzapfenverbindung auf dem Griff, um die der Auslöser innerhalb des Griffes drehend geführt wird,
- zumindest einen Haken (141) auf dem Auslöser, der dazu geeignet ist, zumindest an einem Vorsprung (125) eines Verbindungsstückes (121) einzuhaken, das kraftschlüssig mit dem Adapter verbunden ist,
- eine dritte Achse (77) einer Drehzapfenverbindung, um die der Griff und der Adapter zueinander drehend geführt werden, und
**dadurch gekennzeichnet, dass** er eine Vorrichtung zum Einstellen des bündigen Abschlusses der Griffoberfläche mit der aerodynamischen Fläche umfasst, wobei die besagte Vorrichtung folgendes umfasst
- das Verbindungsstück (121), das zwei Seitenplatten (123) aufweist, wobei auf einer der beiden der Vorsprung und eine obere Verbindungsplatte (127) angeordnet sind,
- eine Schraube (129), die dazu geeignet ist, in einer ersten Vertiefung (139) mit Gewinde (67) des Adapters ein- und ausgeschraubt zu werden, wobei sich ein Kopf (131) der Schraube an der besagten oberen Verbindungsplatte (127) anlegt.

2. Riegel nach Anspruch 1, **dadurch gekennzeichnet, dass**
- der Schraubenkopf eine gerändelte Peripherie (143) aufweist,
- der Adapter eine Lasche (115) umfasst, die sich an der besagten Peripherie anlegt.

3. Riegel nach einem der Ansprüche 1 bis 2, **dadurch gekennzeichnet, dass**
- die obere Platte des Verbindungsstückes in etwa senkrecht zu den beiden Seitenplatten liegt, und eine Kerbe (149) aufweist, die dazu geeignet ist, einen Schaft (13) der Schraube aufzunehmen,
- die besagten Platten Ränder aufweisen, die parallel zueinander liegen,
- der Adapter vier Wände (163; 165) aufweist, die parallel zueinander liegen, und die besagten Ränder berühren,
- die Schraube an ihrem Schaft und in einem Abstand zum Kopf, der in etwa der Stärke des Verbindungsstückes entspricht, einen Ansatz (135) aufweist, der in etwa senkrecht zum besagten Schaft steht.

4. Riegel nach einem der Ansprüche 1 bis 3, **dadurch gekennzeichnet, dass** die Haltelasche folgendes aufweist
- entweder einen Querschnitt in V-Form, wobei die Spitze des V so konfiguriert ist, dass sie in Hohlräume der Rändelung der Schraubenköpfe eingeführt werden kann.
- oder einen Spalt, der dazu geeignet ist, eine Zacke der Rändelung an der Peripherie des Schraubenkopfes aufzunehmen.

5. Riegel nach einem der Ansprüche 1 bis 4, **dadurch gekennzeichnet, dass** der Adapter eine zweite Vertiefung (81) aufweist, die in etwa senkrecht zur ersten Vertiefung liegt, die zumindest zum Teil ein Gewinde aufweist, und in die ein Gewindestift (103) des Hakens (73) über ein Anpassungszwischenstück (79) mit Außen- (111) und Innengewinde (113) geschraubt wird, wobei durch den besagten Adapter und die besagte Vertiefung eine Spindel (101) führt, die dazu geeignet ist, die Kerbe (119) zu berühren, die in den besagten Stift eingearbeitet ist.

6. Riegel nach Anspruch 5, **dadurch gekennzeichnet, dass**
- die Seitenplatten des Verbindungsstückes zwei Langlöcher (151) aufweisen, durch die die Spindel geführt werden kann, und die besagten Langlöcher einen Querschnitt (159) aufweisen, der sich zu einer Einstellung des Abstandes zwischen dem Verbindungsstück und dem Adapter eignet, wobei die besagte Einstellung gemäß einem vorbestimmten Anpassungsbereich erfolgt,
- sich die Lasche senkrecht zur Hakenrichtung erstreckt, sodass sie sich an einer gerändelten Peripherie (117) des Anpassungszwischenstückes anlegt.

7. Riegel nach einem der Ansprüche 5 bis 6, **dadurch gekennzeichnet, dass** der Gewindestift des Hakens einen Absatz (145) umfasst, der dazu geeignet ist, sich auf Anschlag gegen die Spindel zu legen, wenn der Haken dazu neigt, aus der Vertiefung auszutreten.

8. Riegel nach Anspruch 7, **dadurch gekennzeichnet, dass** die Spindel (101) einen kreisförmigen Querschnitt aufweist, und die Kerbe (119)
- entweder ein Kreuz ist, das in den Gewindestift (103) des Hakens eingearbeitet ist, wobei das besagte Kreuz einen ebenen Boden und gekrümmte Enden aufweist, die dazu geeignet sind, sich an die Spindelform anzulegen, wobei das gekrümmte Ende, das dem Haken gegenüber liegt, den Absatz (145) darstellt.
- oder ein länglicher Spalt, der durch den Gewindestift (103) des Hakens hindurch eingearbeitet, und dazu geeignet ist, sich an die Spindelform anzulegen, wobei das gekrümmte Ende, das dem Haken gegenüber liegt, den Absatz (145) darstellt.

9. Riegel nach Anspruch 7, **dadurch gekennzeichnet, dass** der Absatz (145) ein Vorsprung ist, der sich in eine in etwa senkrechte Richtung zu einer Ebene erstreckt, die durch die Grate des Gewindes des Hakens verläuft.

10. Verfahren zur Montage eines Riegels (55) mit Haken nach einem der Ansprüche 1 bis 9, bei dem
- man einen Griff (61) und einen Auslöser (63) bearbeitet (167) und zusammensetzt (169),
- man einen Haken (73), eine Spindel (101) und ein Anpassungszwischenstück (79) mit Außengewinde (111) und Innengewinde (113) bearbeitet, und der Haken zu einem Stift (103) wird, der zumindest teilweise mit einem Gewinde versehen ist,
- man einen Adapter (69) formt (173), indem man darin zwei Vertiefungen (81, 139) einarbeitet, die sich über Richtungen erstrecken, die in etwa senkrecht zueinander stehen,
- man ein Gewinde (175) in die besagten Vertiefungen einarbeitet, und man den besagten Adapter in Querrichtung anbohrt, und man danach
- den Adapter und den Griff mithilfe einer ersten Niete (93) zusammensetzt, die sich entlang einer Achse (77) einer Drehzapfenverbindung erstreckt,
**dadurch gekennzeichnet, dass**
- man eine Vorrichtung zum Einstellen des bündigen Abschlusses des Griffes zu einer aerodynamischen Fläche (67) des Fahrzeugs bearbeitet (171), wobei die besagte Einstellvorrichtung ein Verbindungsstück (121) und eine Schraube (129) umfasst, und
- man die besagte Vorrichtung danach in eine der Gewindebohrungen des Adapters schraubt (179), und den Gewindestift des Hakens in die andere Gewindebohrung, und
- man die Spindel danach durch das Verbindungsstück und den Adapter einführt (181).

11. Verfahren zum Einstellen eines bündigen Abschlusses einer Oberfläche (65) eines Griffs (61) eines Riegels (55) mit Haken nach einem der Ansprüche 1 bis 9 gegenüber einer aerodynamischen Fläche (67) eines Fahrzeugs, bei dem
- man den Riegel schließt (185),
- man einen bündigen Abschluss oder einen Überstand zwischen der Oberfläche des Griffes und der aerodynamischen Oberfläche des Fahrzeugs beispielsweise durch eine Messung erhebt, und man danach,
- wenn der bündige Abschluss einem vorbestimmten Ergebnis entspricht, die Einstellung bestätigt (189), oder
- wenn der bündige Abschluss dem besagten Ergebnis nicht entspricht,
- man den Riegel öffnet (191) und einen Winkel anpasst (193), der durch den Griff und den Adapter gebildet wird, indem man eine Schraube (129) einer Vorrichtung zum Einstellen des bündigen Abschlusses festzieht oder löst, das im Riegelsystem eingebaut ist, und man danach
- den Riegel wieder schließt, und man danach
- den bündigen Abschluss oder den Überstand neu bewertet,
- wenn der bündigen Abschluss einem vorbestimmten Ergebnis entspricht, die Einstellung bestätigt, oder
- wenn der bündigen Abschluss dem besagten Ergebnis nicht entspricht, man den Überstand solange verringert, bis man das besagte Ergebnis erhält.
